# EUROPEAN PATENT APPLICATION

(11) **EP 3 415 689 A1**
(43) Date of publication of application: **19.12.2018**
(21) Application number: 17181695.2
(22) Date of filing: 17.07.2017
(51) Int. Cl.: E01C 7/35, E01C 11/22

(54) **ARCHITECTURAL PAVEMENT**

(30) Priority: 16.06.2017 GB 201709628
(71) Applicant: Stencil-Tech Ltd, Mere Way Wyton Huntingdon Cambridgeshire PE28 2JZ (GB)
(72) Inventor: ADAMS, Fredderick Joseph, Huntingdon Cambridgeshire, PE28 2JZ (GB)
(74) Representative: Evens, Paul Jonathan

(57) **Abstract**

A method of constructing a permeable load-bearing structure, comprising: providing (12) a slab (100) of porous asphalt or permeable concrete on a substrate; placing (16) a stencil (104) on an upper surface of the slab (100), the stencil (104) having at least one aperture (108) therein defining a pattern; applying (18) a slurry (102) comprising a cementitious material to the stencil (104) to reproduce the pattern on the surface of the slab (100) and penetrate into the slab to a depth of at least 2mm; and removing (24) the stencil (104) from the slab (100).

## Description

### TECHNICAL FIELD

The present invention relates to a method of constructing a permeable, load-bearing surface or outdoor floor.

### BACKGROUND ART

There is a growing demand for permeable, load-bearing surfaces in the construction industry to help manage heavy rainfall events which might otherwise lead to flooding. Porous asphalt and permeable concrete have both been used for architectural pavements, including driveways, pedestrian walkways, patios, road surfaces, carparks, playgrounds and the like. However, due to their nature, porous asphalt and permeable concrete have an appearance which is more coarse, with larger pores or open-cells at the surface, than standard asphalt and concrete, making them less attractive and less hard wearing than standard asphalt and concrete. The present invention has been devised to ameliorate and even obviate such disadvantages whilst maintaining significant porosity and/or permeability.

### STATEMENT OF INVENTION

In accordance with one aspect of the present invention, there is provided a method of constructing a permeable load-bearing structure, comprising: providing a slab of porous asphalt or permeable concrete on a substrate (e.g. a pre-prepared ground base of porous material); placing a stencil on an upper surface of the slab, the stencil having at least one aperture therein defining a pattern; applying a slurry comprising a cementitious material to the stencil to reproduce the pattern on the surface of the slab and penetrate into the slab to a depth of at least 2mm; and removing the stencil from the slab.

The present applicant has discovered that by allowing the slurry to penetrate into the slab, and then allowing the cementitious material in the slurry to harden, it is possible to produce a permeable load-bearing structure which is more durable and aesthetically more pleasing than porous asphalt and/or permeable concrete. The method may comprise applying the slurry such that it penetrates into the slab to a depth of less than 10mm. For example, the method may comprise applying the slurry such that it penetrates into the slab to a depth of between 3mm and 5mm.

Typically, the cementitious material will harden over a period of up to 28 days or more, but will achieve sufficient hardness to allow stencil removal without compromising the permeable load-bearing structure within 24 hours, perhaps even within 12 hours. Typically, the stencil will be removed from the slab within 12 hours, perhaps even within 6 hours (e.g. between 2-4 hours), of applying the slurry to the stencil. The actual time may be dependent upon ambient weather conditions and temperatures. The method may further comprise using a pressure sensitive adhesive to secure the stencil to the upper surface of the slab before applying the slurry. For example, the pressure sensitive adhesive may be applied to the stencil before placing the stencil on the upper surface of the slab. Not only does the pressure sensitive adhesive prevent accidental movement of the stencil relative to the slab whilst the slurry is applied, but also it helps ensure the pattern is reproduced with "sharp", well-defined edges by resisting undesirable lateral spread of the slurry beyond the perimeter of the or each aperture.

The stencil has a framework surrounding the at least one aperture which acts as a mask, preventing the slurry from contacting part of the upper surface of slab which is registered with the framework. The framework leads to the formation of a corresponding drainage channel profile in the permeable load-bearing structure, which allows water to permeate and drain through the slab. The ratio of aperture area to framework area may be at least 5:1, possibly even at least 10:1, per unit area of stencil. The ratio of aperture area to framework area may be at least 20:1, per unit area of stencil. With such ratios, the permeability of the resulting load-bearing surface may be at least about 50% of the permeability of standard asphalt and concrete.

The stencil may comprise a plurality of apertures surrounded by the framework. The apertures and the framework may be configured to recreate any known brick, block, cobble, paving or tile pattern, or to create a pseudo random pattern such as "crazy paving".

The slurry may further comprise a polymer configured to enhance adhesive properties to the slurry. For example, the polymer may be an acrylic polymer. Such a polymer may help bind the slurry to the slab of porous asphalt or permeable concrete, as the slurry hardens.

The slurry may further comprise a wetting agent. The wetting agent may improve the workability (i.e. fluidity) of the slurry, encouraging penetration into the slab.

The slurry may further comprise various sized aggregates with average diameters ranging from about 1.5mm to about 0.00025mm, for example 1.2mm to 0.0005mm.

The method may further comprise applying secondary aggregates to the slurry once applied to the stencil, but before the cementitious material has hardened, so that the secondary aggregates are bound to the slab by the cementitious material. The secondary aggregates may have an average diameter in the range of about 1.0mm to about 3.0mm. The secondary aggregates provide a surface texture which may be largely aesthetic and/or may increase frictional forces acting on an object sliding over the surface, and hence improves slip and skid resistance.

Before removing the stencil from the slab, the method may further comprise applying at least one coat of a sealer to the slurry applied to the stencil. In this way, the hardening slurry will be protected by the sealer, whilst any region of the slab masked by the stencil will remain free of sealer.

### BRIEF DESCRIPTION OF THE DRAWINGS

An embodiment of the invention will now be described by way of example and with reference to the accompanying Figures, in which:
Figure 1 is a flow diagram showing the steps in a method of constructing a permeable load-bearing structure embodying the present invention; and
Figure 2 is an exploded, cut-away schematic illustration of a permeable load-bearing structure being constructed in accordance with the method of Figure 1.

### DETAILED DESCRIPTION OF SPECIFIC EMBODIMENT

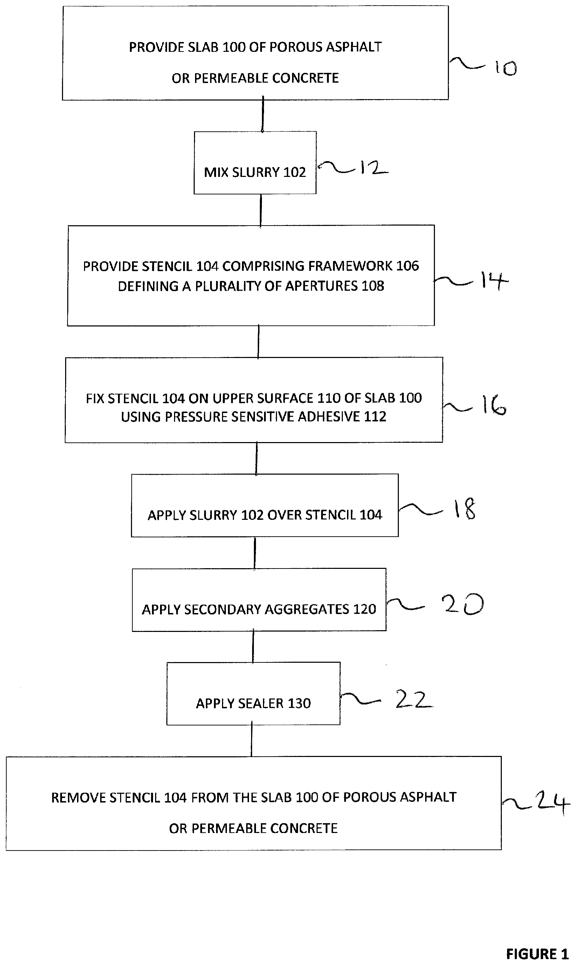

Figure 1 illustrates one method of constructing a permeable load-bearing structure 50 embodying the present invention.

At step 10, a slab 100 of porous asphalt or permeable concrete is provided. Typically, the slab 100 of porous asphalt or permeable concrete will be formed *in situ* on the ground, but it could conceivably be prepared in a mould for transport to a construction site. If formed *in situ*, the slab 100 of porous asphalt or permeable concrete may be laid on a sub-base of free-draining ballast.

At step 12, a slurry 102 is mixed. The slurry 102 comprises cementitious material, various sized aggregates in the range of about 1.2mm to 0.0005mm, an acrylic polymer, and other additives as may be required. A typical mix ratio is:
1 part Portland cement
2 parts building sand*
Additives selected from wetting agent, hardener and/or pigment**

*Average diameter of sand in the range of about 1.2mm to 0.0005mm.
**Pigments are optional, and may be added for example to produce a brick red colour.

Typically, 1 litre of acrylic liquid polymer per every 5 kilograms of the above blended mixture is added to form the slurry 102.

At step 14, a stencil 104 is provided. The stencil 104 comprises a framework 106 defining a plurality of apertures 108 which form a pattern, e.g. a brickwork or block paving pattern.

At step 16, the stencil 104 is positioned on the upper surface 110 of the slab 100 of porous asphalt or permeable concrete. The stencil 104 may be secured to the upper surface 110 of the slab 100 of porous asphalt or permeable concrete using a pressure sensitive adhesive 112.

At step 18, the slurry 102 is applied to the stencil 104 in order to reproduce the pattern on the upper surface 110 of the slab 100. The slurry 102 may be applied with a mechanical spray machine, a gravity fed Hopper gun, or even with a trowel. The slurry 102 will penetrate to a depth (δ) of at least 2mm, and typically 2-5mm into the slab 100 of porous asphalt or permeable concrete, through pores and/or open cells therein, and accumulate to form in each aperture 108 of the stencil 104 an "island" or raised profile on the surface 110 of the slab 100 of porous asphalt or permeable concrete.

At step 20, secondary aggregates 120 may be applied to the stencil 104 after the slurry 102 is applied to the stencil 104, but before the cementitious material in the slurry 102 has hardened, so that the secondary aggregates 120 will in time become bound to the slab 100 of porous asphalt or permeable concrete by the cementitious material. The secondary aggregates 120 have an average diameter of about 1.0mm to about 3.0mm and impart a decorative and/or non-slip texture to the permeable, load-bearing substrate being constructed.

At step 22, a sealer 130 may be applied to the slurry 102 as it hardens once applied to the stencil 104.

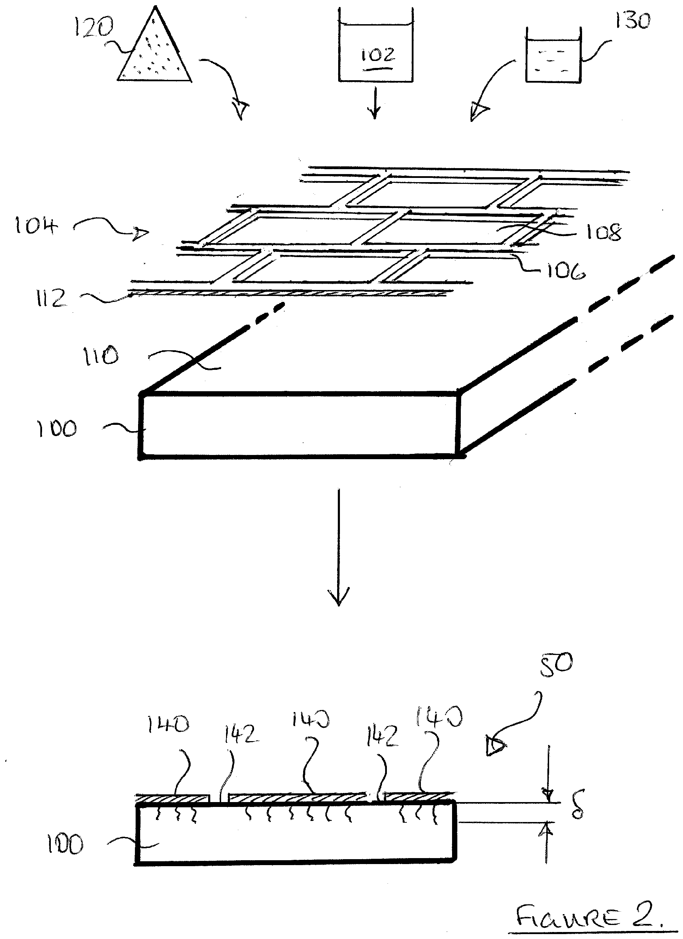

At step 24, the stencil 104 is removed from the slab 100 of porous asphalt or permeable concrete, once the slurry 102 has hardened sufficiently to hold its shape, typically 2-4 hours after it is applied to the stencil 104. The resulting permeable load-bearing structure 50 as a shown in Figure 2 has an array of slurry-covered formations 140 (corresponding to the apertures 108) separated by channels 142 (corresponding to the framework 106). Whilst the slurry-covered formations 140 are impervious, the channels 142 allow water to drain down through the slab 100 of porous asphalt or permeable concrete.

Hydro-conductivity tests of the permeable load-bearing structure 50 show that it has at least 50% of the hydro-conductivity of the slab 100 of porous asphalt or permeable concrete alone. This is despite the fact that the slurry-covered formations 140 may cover at least 75%, and possibly at least 80%, 85% or even 90% surface of the permeable load-bearing structure 50 (with the channels 142 occupying the remainder).

## Claims

1. A method of constructing a permeable load-bearing structure, comprising:
providing a slab of porous asphalt or permeable concrete on a substrate;
placing a stencil on an upper surface of the slab, the stencil having at least one aperture therein defining a pattern;
applying a slurry comprising a cementitious material to the stencil to reproduce the pattern on the surface of the slab and penetrate into the slab to a depth of at least 2mm; and
removing the stencil from the slab.

2. A method according to claim 1, further comprising removing the stencil within 12 hours, perhaps even within 6 hours, of applying the slurry to the stencil.

3. A method according to claim 1 or claim 2, further comprising using a pressure sensitive adhesive to secure the stencil to the upper surface of the slab before applying the slurry.

4. A method according to any one of the preceding claims, in which the stencil has a framework surrounding the at least one aperture which acts as a mask, preventing the slurry from contacting part of the upper surface of slab which is registered with the framework, with the ratio of aperture area to framework area being at least 5:1, possibly even at least 10:1, per unit area of stencil.

5. A method according to any one of the preceding claims, in which the slurry further comprises a polymer, for example an acrylic polymer.

6. A method according to any one of the preceding claims, in which the slurry further comprises various sized aggregates with average diameters ranging from about 1.5mm to about 0.00025mm.

7. A method according to any one of the preceding claims, further comprising applying secondary aggregates to the load-bearing structure after the slurry is applied to the stencil, but before the cementitious material has hardened, so that the secondary aggregates become bound to the slab by the cementitious material.

8. A permeable, load-bearing structure obtainable by a method as defined in any one of claims 1 to 7.
